# EUROPEAN PATENT APPLICATION

(11) **EP 1 263 197 A2**
(43) Date of publication of application: **04.12.2002**
(21) Application number: 02011011.0
(22) Date of filing: 17.05.2002
(51) Int. Cl.: H04M 1/57, H04M 3/42

(54) **System and method for delivering profile information relating to a caller**

(30) Priority: 31.05.2001 US 871289
(71) Applicant: ALCATEL, 75008 Paris (FR)
(72) Inventor: Mani, Babu V., Plano, TX 75025 (US)
(74) Representative: Dreiss, Fuhlendorf, Steimle & Becker

(57) **Abstract**

A personalized calling party ID display service in a telecommunications network. Upon initiating a phone call by a calling party towards a called party having a caller ID service, an access code associated with the present invention's service is operable to be effectuated by the calling party. In one embodiment, the calling party selects a particular identification indicium by entering a numeric code. In another embodiment, the calling party dynamically enters a personalized identification indicium at the calling party's station. Where an identification indicium has not been selected or entered, a default indicium may be provided by the network. The service logic is operable to replace or augment a conventional caller ID parameter with the personalized identification indicium based on a service profile query, with the dynamically entered identification indicium, or with a default indicium, and transmit the indicium to the called party provided the caller ID service is active.

## Description

### BACKGROUND OF THE INVENTION

### Technical Field of the Invention

The present invention generally relates to telecommunication services. More particularly, and not by way of any limitation, the present invention is directed to a personalized caller ID display service in a telecommunications network.

### Description of Related Art

Over the last two decades or so, telecommunication services have evolved rapidly from simple telephone calls and fax communications to a host of advanced services such as multi-party conferences, voice mail, call forwarding, caller ID, call waiting, et cetera. This rapid evolution has been made possible primarily due to the successful deployment of the Intelligent Network (IN) and Advanced IN (AIN) architecture using Signaling System No. 7 (SS7) as the out-of-band signaling protocol infrastructure.

Given the proliferation of various telecom services, service differentiation is often considered one of the most significant competitive advantages a telephone company has in today's highly deregulated telecommunications market. Accordingly, providing cost-effective, user-friendly services that are customizable is seen as a critical factor for a telephone company's success. Further, such services are expected to provide convenience, freedom of choice, et cetera, to the subscribers, while contributing to their increased productivity as well.

Caller ID, a well known example of services that customers have come to use ubiquitously, is a telephone on-hook capability that provides a called party with information about a calling party before the call is answered. Conventionally, such information includes the date and time of the call and the caller's telephone number. Further, a caller's name may also be provided to the called party subscriber in what is known as an "enhanced caller ID" service.

It is evident that the caller ID service in the Public Switched Telephony Network (PSTN) can offer several advantages to the called party subscriber. Identification of the calling party, as provided by the caller ID service, is expected to allow the called party to screen an incoming call personally before its completion and thereby to decide whether or not it is desirable to answer the call. Nuisance calls, such as mass market advertising (i.e., telemarketing) and solicitation calls, can be avoided if the identity of the caller is determined accurately beforehand. Knowledge of caller identity also serves as a resource for dealing with and curtailing harassment calls. Further, where multiple residents share a single phone line, it is hoped that an incoming phone call can be answered by the appropriate individual based on the caller ID information.

Despite these claimed advantages to the called party subscriber, several deficiencies and shortcomings remain with respect to the state-of-the-art caller ID services. Most significantly, the caller ID information that can be provided to a caller ID subscriber is static, in the sense that the name and/or telephone number are fixedly bound to a station and the primary listing customer associated therewith. As a consequence, where a plurality of individuals share a single phone line, only one fixed name (i.e., the primary customer's name) is presented to the called party subscriber even in the enhanced caller ID service. Accordingly, the called party does not know who the actual calling party really is. It should be readily recognized by those skilled in the art that this uncertainty nullifies to a large extent the benefits of the caller ID service in the first place.

Complications also arise with callers who subscribe to distinctive ringing type services that provide a plurality of telephone numbers for the same subscriber line. The distinctive ringing service subscriber may reserve one number for important calls, which would be answered under most circumstances, while using another number for less important calls that the subscriber may choose to ignore. Alternatively, each number may be associated with a different resident, the intended called party being indicated by the distinctive ring. In other circumstances a subscriber may require two telephone numbers to distinguish between business calls and personal calls. The business name could be listed for the business number, while the subscriber's name could be listed for personal calls. In all these scenarios, the conventional caller ID services cannot distinguish between the various telephone numbers as well as names for an individual call.

### SUMMARY OF THE INVENTION

Accordingly, the present invention advantageously provides a personalized calling party ID display service in a telecommunications network (e.g., an IN/AIN-based network) wherein a calling party is capable of specifying what identification information to be transmitted to a called party who is a subscriber of a conventional caller ID service. In one presently preferred exemplary embodiment, the present invention is directed to a method for supplying personalized calling party information in the telecommunications network, which information is operable to be displayed to the called party. Upon initiating a phone call by the calling party towards the called party, a service access code is operable to be effectuated by the calling party. A particular identification indicium to be displayed to the called party is selected by the calling party by entering an predetermined numeric code, and the like. As an example, a single digit number (1, 2, 3, or 4, etc.) which corresponds to a particular name or indicium in a service profile associated with the primary phone customer (i.e., subscriber) may be entered by the calling party. An optional recall dial tone or announcement may be provided by the network at this point, whereupon a destination number (i.e., the called party's directory number) is entered by the calling party. Responsive at least in part to the service access code entered by the calling party, service logic associated with the node serving the calling party is operable to replace or augment a conventional caller ID parameter corresponding to the calling party's station (e.g., a fixed station number or name) with the particular identification indicium based on querying the primary subscriber's profile. The selected identification indicium is thereafter transmitted to the called party's station in addition to, or in place of, the fixed caller ID, provided the called party's caller ID service is active when the phone call is made by the calling party.

In another presently preferred exemplary embodiment of the present invention, the method of supplying personalized calling party information involves dynamic presentation of an identification indicium by the calling party at the time of making a phone call. Similar to the exemplary embodiment summarized above, a service access code is operable to be effectuated by the calling party upon initiating the phone call. An optional indication may be entered by the calling party to indicate to the network that a personalized identification indicium (e.g., full name, short name, pet name, nickname, or any other moniker, or a personalized geographic/location descriptor identified with the calling party or station, et cetera) is to be entered at the calling party's station. Subsequently, the personalized identification indicium is entered by the calling party. An optional recall dial tone or announcement may follow, whereupon a destination number (i.e., the called party's directory number) is entered by the calling party. Responsive at least in part to the service access code, the service logic is operable to replace or augment a conventional caller ID parameter corresponding to the calling party's station (e.g., the station number or the primary subscriber's name) with the dynamically-entered personalized identification indicium. The personalized identification indicium is thereafter transmitted in addition to, or in place of, the fixed caller ID to the called party's station, provided the called party's caller ID service is active when the phone call is made by the calling party.

### BRIEF DESCRIPTION OF THE DRAWINGS

A more complete understanding of the present invention may be had by reference to the following Detailed Description when taken in conjunction with the accompanying drawings wherein:

FIG. 1 depicts an exemplary embodiment of a telecommunications network employed for practicing the teachings of the present invention;

FIG. 2 depicts an exemplary embodiment of a primary phone customer's service profile for effectuating the present invention's personalized ID display service;

FIG. 3 is a flow chart of the steps involved in an exemplary embodiment of a method for supplying personalized calling party information to be displayed at a called party's station in accordance with the teachings of the present invention; and

FIG. 4 is a flow chart of the steps involved in another exemplary embodiment of the method for supplying personalized calling party information to be displayed at a called party's station in accordance with the teachings of the present invention.

### DETAILED DESCRIPTION OF THE DRAWINGS

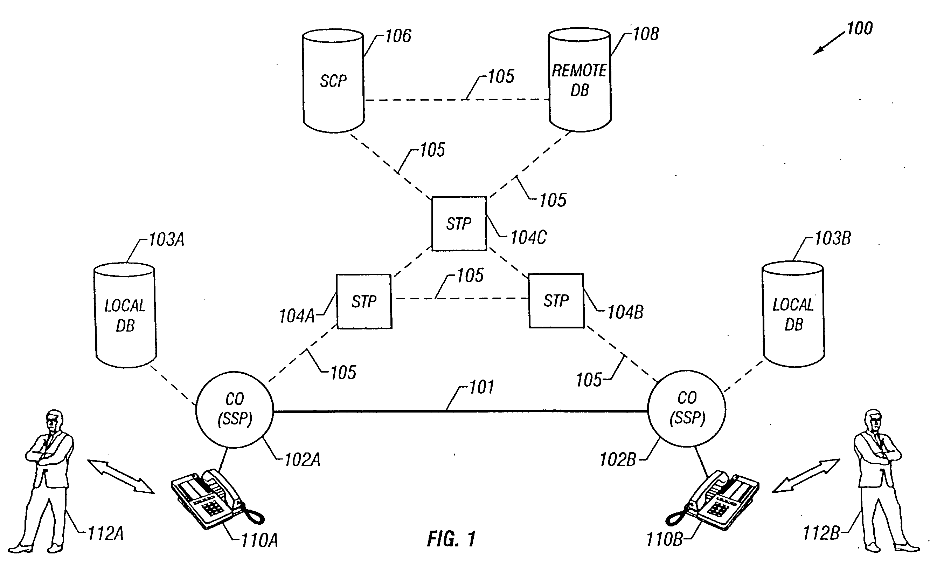

In the drawings, like or similar elements are designated with identical reference numerals throughout the several views thereof, and the various elements depicted are not necessarily drawn to scale. Referring now to FIG. 1, depicted therein is an exemplary embodiment of a telecommunications network 100 employed as the Public Switched Telephony Network (PSTN) for effectuating a personalized calling party ID display service in accordance with the teachings of the present invention. Those skilled in the art should readily recognize that the telecommunications network 100 is preferably embodied as a network of a plurality of SS7-compliant nodes interconnected to be operable in well known manner. Reference numerals 102A and 102B refer to two Service Switching Points (SSPs) disposed as central office (CO) nodes in the network 100 for serving a calling party 112A and a called party 112B, respectively. Reference numerals 110A and 110B refer to two telephone terminals or stations coupled to CO/SSP 102A and CO/SSP 102B, respectively, via appropriate local loops. In the exemplary embodiment depicted in FIG. 1, accordingly, station 110A is operable as a calling party station and station 110B is operable as a called party station.

As is well known, when an SS7-compliant CO encounters a service trigger with respect to a call being processed thereat, that CO suspends call processing in order to query a suitable database before completing the call. The database preferably comprises a plurality of service profiles or call processing records, each associated with a subscriber, and is operable to generate a result that is used by the querying CO for call setup. After the querying CO and an appropriate remote CO (if the calling and called parties are served by different COs) complete the call setup process, a voice trunk may be established therebetween.

In one implementation, the service profile database may be provided locally. Accordingly, each CO/SSP node may preferably be provided with one or more local databases, e.g., local database 103A associated with CO/SSP 102A and local database 103B associated with CO/SSP 102B, for storing service profiles with respect to the subscribers served by the respective network elements. In another implementation, a hierarchical database architecture involving both local as well as remote databases may be used for storing the subscriber service profiles. In addition to the local databases 103A and 103B, a remote database 108 may therefore be centrally located in association with a Service Control Point (SCP) node 106 that is operable to be accessed by the SSP nodes via one or more Signal Transfer Point (STP) nodes, e.g., STP 104A, STP 104B and STP 104C, using SS7-based common channel interoffice signaling (CCIS) links 105. In yet another implementation, the service logic and associated service profile database may reside at the serving SSP (i.e., SSP 102A) itself. Additional details regarding an exemplary CO/SSP node disposed in an SS7-based telecommunications network and associated messaging may be found in U.S. Patent No. 5,864,612, issued to *Strauss et al*., which is hereby incorporated by reference.

Reference numeral 101 refers to a voice trunk established between CO/SSP 102A and CO/SSP 102B after the call setup process therebetween is completed with respect to a call initiated by the calling party 112A towards the called party 112B. In the conventional caller ID schemes, prior to establishing the voice trunk, either the directory number of station 110A, primary subscriber's name, or both, (collectively referred to as fixed caller ID parameters) may be transmitted to the called party's station 110B to be displayed thereat. As set forth in the Background section of the present patent application, although transmission of such fixed caller ID information to the called party may be useful in some instances, several deficiencies exist in the current schemes.

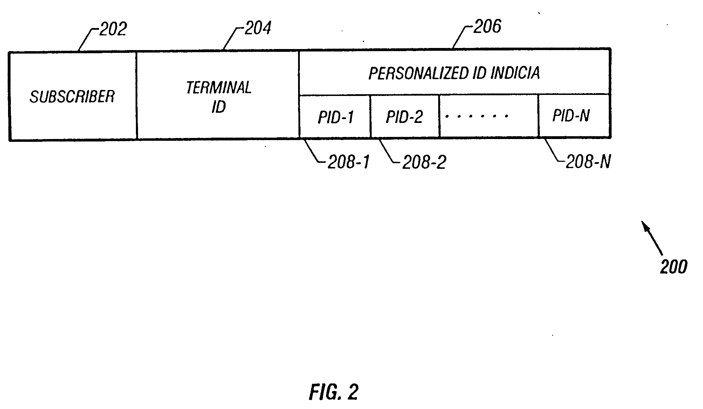

FIG. 2 depicts an exemplary embodiment of a service profile 200 for effectuating a personalized ID display service in a telecommunications network (e.g., network 100 described hereinabove) in accordance with the teachings of the present invention, wherein the calling party is capable of specifying what identification information to be transmitted to a called party instead of the fixed caller ID information. The exemplary service profile 200 identifies a primary subscriber 202 (with a default name or indicium associated therewith) of the new service of the present invention. The subscriber's station or terminal ID 204 is identified with a line directory number (e.g., a ten-digit number which comprises a three-digit area code ("NPA") defining a specific geographic area followed by a three-digit office code ("NXX") identifying a particular CO switch, that is followed in turn by a four-digit customer line ("XXXX")). A plurality of personalized identification indicia 206 are associated with the subscriber indicium 202, wherein each personalized ID indicium (PID) is preferably uniquely associated with a calling party operating the subscriber station (e.g., station 110A depicted in FIG. 1). Reference numerals 208-1 through 208-N refer to N indicia corresponding to a number of calling parties (for example, members of a family, multiple individuals residing in an apartment, etc.) who share the use of the subscriber station. Preferably, the PIDs can comprise full names, short names, pet names, nicknames, or any other monikers, personalized geographic/location descriptors identified with the calling party or station (e.g., "Bob's home"), personalized relational phrases (such as "MOM", "DAD", etc.), and the like. In addition, one or more PIDs in the subscriber service profile 200 may be provided as guest indicia (e.g., "GUEST", "VISITOR", "HOUSE GUEST", "REPAIR PERSON", etc.) operable to be selected by guests, visitors, and the like by entering a corresponding code.

In accordance with one exemplary embodiment of the present invention, each of the PIDs and guest indicia is associated with a predetermined code, e.g., a numeric code, whereby a calling party initiating a phone call can make a selection as to which particular identification indicium is to be transmitted to the called party, provided the called party is a subscriber of a conventional caller ID service. For instance, entering "1" at the subscriber station indicates to the service logic of the present invention operable in association with the serving node that upon querying a service database with respect to the subscriber service profile, PID-1 is to be transmitted to the called party in place of a fixed caller ID parameter that would have otherwise been transmitted. Similarly, entering "2" at the subscriber station by a calling party is operable to select PID-2, which indicium is preferably associated with the calling party. Various guest indicia 210 can also be selected in like manner by the appropriate calling parties when operating the subscriber station associated with terminal ID 204. When no PID code is entered, a default indicium may be selected by the network.

Those skilled in the art should realize upon reference hereto that the service profile 200 described hereinabove is illustrative only. Accordingly, both the contents and specific implementation of a subscriber profile database may vary depending upon the objectives of a particular application. Additional default options, options to include dynamic presentation of personalized indicia, time out periods associated with default options, options to block the conventional caller ID service(s) and associated scheduling preferences, et cetera, may also be included in certain embodiments of a service profile provided in accordance herewith. It should therefore be recognized that the scope of the present invention is not circumscribed by the specifics of a subscriber profile database in any manner.

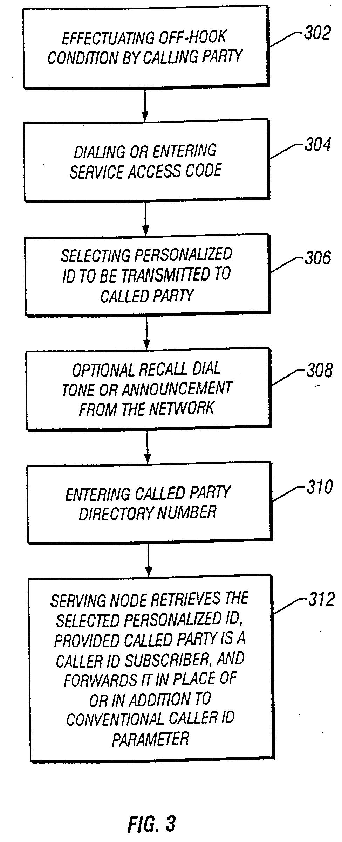

Referring now to FIG. 3, depicted therein is a flow chart of the steps involved in an exemplary embodiment of a method for supplying personalized calling party information to be displayed at a called party's station in accordance with the teachings of the present invention. Upon initiating a phone call by a calling party towards a called party (e.g., by effectuating an off-hook condition at the calling party's station or by pressing a button on a keypad associated with the station) (step 302), a service access code is operable to be effectuated by the calling party (step 304). In an exemplary implementation, the service access code may comprise an asterisk (*) followed by a unique number combination (e.g., *69) or an alphanumeric string (e.g., *PID). A particular identification indicium to be transmitted/displayed to the called party may thereafter be selected by the calling party by entering a predetermined PID code corresponding thereto (step 306). After entering the PID code by the calling party, the serving CO may provide an optional recall dial tone or an announcement, e.g., to alert the calling party to enter or dial the called party's number (step 308). Regardless of whether a recall dial tone or announcement is provided, the called party's directory number is subsequently entered by the calling party (step 310). The call processing model's service logic, preferably operable in conjunction with the serving CO/SSP node and triggered by the service access code, queries a suitable database to retrieve the selected identification indicium corresponding the PID code, provided the called party is a caller ID subscriber. It should be apparent to those skilled in the art that in certain exemplary embodiments appropriate SS7 signaling messages may flow between the originating CO/SSP and terminating CO/SSP nodes or between a CO/SSP and a caller ID database with respect to determining whether the called party is a caller ID subscriber and if the caller ID feature is active when the phone call is made by the calling party. If so, one or more of the fixed caller ID parameters corresponding to the subscriber station (i.e., the calling party's terminal) are replaced or augmented with the selected identification indicium (or the default indicium, as the case may be) at the option of the operating company. The selected identification indicium or the combination including the fixed caller ID parameter(s) is subsequently transmitted to the called party. These procedures are consolidated as step 312 in FIG. 3.

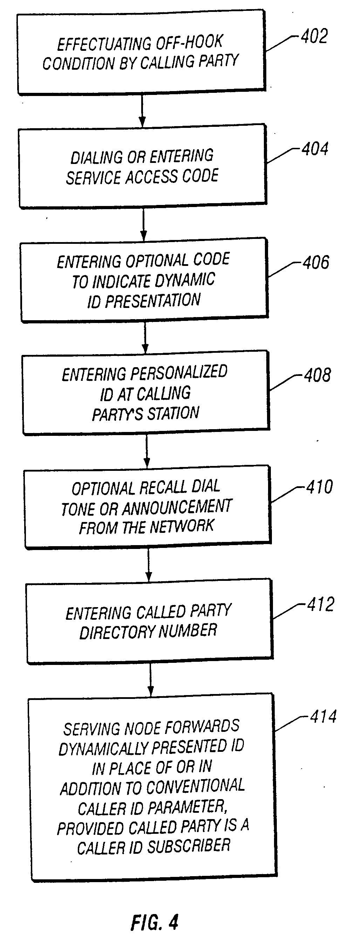

FIG. 4 is a flow chart of the steps involved in another exemplary embodiment of the method for supplying personalized calling party information in accordance with the teachings of the present invention, wherein a particular identification indicium is operable to be dynamically presented by the calling party at the time of making a phone call. Similar to the exemplary embodiment described hereinabove, upon initiating the phone call by the calling party (e.g., by effectuating an off-hook condition) (step 402), a service access code is effectuated by the calling party with respect to the phone call (step 404). An optional indication or code may be entered by the calling party to indicate to the service logic that a personalized identification indicium is to be dynamically entered at the calling party's station (step 406). As set forth hereinabove, the identification indicium may comprise a full name, short name, pet name, nickname, or any other moniker, or a personalized geographic/location descriptor identified with the calling party or station (e.g., "Bob's home"), or a personalized relational phrase (such as "MOM", "DAD", etc.), and the like.

Subsequently, irrespective of whether an optional code is required, the personalized identification indicium is entered by the calling party at the calling party station (step 408). Where no PID indicium has been entered by the calling party, a default indicium may be selected by the network based on the subscriber's service profile. In one exemplary implementation, the default indicium may be identical to the fixed caller ID parameter(s).

An optional recall dial tone or announcement may follow the PID indicium entry or after the timeout (step 410), similar to the profile-based calling party identification scheme described above with respect to FIG. 3. A destination number (i.e., the called party's directory number) is entered by the calling party (step 412). The call processing model's service logic, again preferably operable in conjunction with the serving CO/SSP node and triggered by the service access code, ultimately determines whether the fixed caller ID parameters need to be overridden or augmented with appropriate indicia. Accordingly, suitable determination is required as to whether the called party is a caller ID subscriber and the caller ID feature is active when the phone call is made by the calling party. Again, those skilled in the art should appreciate that in certain exemplary embodiments appropriate SS7 signaling messages may flow between the originating CO/SSP and terminating CO/SSP nodes or between a CO/SSP and a caller ID database with respect to such determination. If the called party is a caller ID subscriber, the fixed caller ID parameters corresponding to the subscriber station are replaced or augmented with the dynamically-entered personalized identification indicium (or the default indicia, as the case may be) at the option of the operating company. The dynamically-entered personalized identification indicium, the default indicium, or the combination including the fixed caller ID parameter(s) is subsequently transmitted to the called party. These procedures are consolidated as step 414 in the flow chart depicted in FIG. 4.

Based upon the foregoing Detailed Description, it should be readily apparent that the present invention provides a novel telecommunication service wherein a calling party is provided with the capability of personalizing identification information on a per call basis. By selecting or effectuating a unique identification indicium that is transmittable in place of a fixed caller ID parameter, the various deficiencies and shortcomings set forth in the Background section of the present patent application with respect to the state-of-the-art caller ID services are advantageously overcome. Because of better identification afforded to calling parties in the practice of the present invention, the likelihood of having to deal with potential nuisance calls is greatly reduced. Relatedly, chances of a call being answered by the appropriate party at the terminating end are significantly increased. Also, because of increased probability of call completion, the need for related services such as voice mail, call diversion, call transfer, et cetera, is reduced. Further enhancements are also possible by providing programmable service profile options coupled with scheduling options.

The personalized calling party ID service of the present invention can also be used to enrich the Multiple Directory Number Service (e.g., "Teen Service") by offering the capability to select a specific directory number (one of the assigned numbers) and name. This can be done by associating a PID with one of assigned directory numbers and maintaining a name against the secondary directory numbers.

As a further enhancement, an indication can be given at the called party's display as to whether the PID is dialed (i.e., dynamically supplied at call setup by the calling party) or retrieved from a stored profile by the network (based on the dialed numeric code). It should be appreciated that the latter option is more reliable, as a calling party may cause mischief by intentionally entering an erroneous name.

It is believed that the operation and construction of the present invention will be apparent from the foregoing Detailed Description. While the exemplary embodiments of the present invention shown and described have been characterized as being preferred, it should be readily understood that various changes and modifications could be made therein without departing from the scope of the present invention as set forth in the following claims. For instance, although the teachings of the present invention have been particularly exemplified within a fixed telephony network (i.e., the wireline PSTN), those skilled in the art should recognize that the personalized calling party ID display service of the present invention can also be provisioned in a wireless telephony network (e.g., a cellular telephony network) in a straightforward manner. In addition, the present invention's service can be suitably provisioned in mixed or hybrid networks, integrated networks with circuit-switched and packet-switched portions, and the like. Irrespective of the type of the telephony network, however, service logic to effectuate the present invention's service and associated database(s) may be architected in various design implementations depending on the service provider including, e.g., a distributed/hierarchical network architecture having third-party application servers, and the like. Moreover, whereas text-based PID indicia have been particularly shown and described with respect to the exemplary embodiments of the present invention, it should be apparent that number-based indicia (e.g., secondary directory numbers, and the like) may also be provided in a further embodiment. Accordingly, these and other variations, changes, additions, modifications, deletions, amendments, combinations, enhancements, et cetera, should deemed to be within the ambit of the present invention whose scope is defined solely by the claims immediately set forth below.

## Claims

1. A method for supplying personalized calling party information in a telecommunications network, comprising the steps:
initiating a phone call by a calling party towards a called party;
effectuating a service access code by said calling party with respect to said phone call;
selecting a particular identification indicium associated with said calling party;
entering said called party's directory number by said calling party; and
responsive at least in part to said service access code, transmitting said particular identification indicium to said called party's station, provided said called party is a subscriber of a caller ID service, wherein said caller ID service is active when said phone call is initiated.

2. The method as set forth in claim 1, wherein said particular identification indicium is augmented to a caller ID parameter corresponding to said calling party's station.

3. The method as set forth in claim 1, wherein a caller ID parameter corresponding to said calling party's station is replaced with said particular identification indicium.

4. The method as set forth in claim 1, wherein said phone call is initiated by said calling party by effectuating an off-hook condition at said calling party's station.

5. The method as set forth in claim 1, wherein said phone call is initiated by said calling party by pressing a button on a keypad associated with said calling party's station.

6. The method as set forth in claim 1, wherein said service access code is effectuated by entering a predetermined alphanumeric string at said calling party's station.

7. The method as set forth in claim 1, wherein said particular identification indicium is selected by entering a predetermined number by said calling party at said calling party's station, said predetermined number corresponding to said particular identification indicium in a service profile associated with said calling party's station.

8. The method as set forth in claim 7, further comprising the steps:
if said particular identification indicium is not selected by said calling party, determining by said service logic a default identification indicium based on querying said service profile; and
transmitting said default identification indicium to said called party's station.

9. The method as set forth in claim 7, wherein said service profile is stored in a local database associated with a switching node serving said calling party.

10. The method as set forth in claim 7, wherein said service profile is integrated within a switching node serving said calling party.

11. The method as set forth in claim 7, wherein said service profile is stored in a remote database associated with a service control point disposed in said telecommunications network.

12. The method as set forth in claim 1, further comprising the step of providing one of a recall dial tone and an announcement to said calling party by said telecommunications network after selecting said particular identification indicium.

13. A method for supplying personalized calling party information in a telecommunications network, comprising the steps:
initiating a phone call by a calling party towards a called party;
effectuating a service access code by said calling party with respect to said phone call;
entering a personalized identification indicium by said calling party at said calling party's station;
entering said called party's directory number by said calling party; and
responsive at least in part to said service access code, transmitting said personalized identification indicium to said called party's station, provided said called party is a subscriber of a caller ID service, wherein said caller ID service is active when said phone call is initiated.

14. The method as set forth in claim 13, wherein said personalized identification indicium is augmented to a caller ID parameter corresponding to said calling party's station.

15. The method as set forth in claim 13, wherein a caller ID parameter corresponding to said calling party's station is replaced with said personalized identification indicium.

16. The method as set forth in claim 13, wherein said phone call is initiated by said calling party by effectuating an off-hook condition at said calling party's station.

17. The method as set forth in claim 13, wherein said phone call is initiated by said calling party by pressing a button on a keypad associated with said calling party's station.

18. The method as set forth in claim 13, wherein said service access code is effectuated by entering a predetermined alphanumeric string at said calling party's station.

19. The method as set forth in claim 13, further comprising the steps:
providing an indication by said calling party that a personalized identification indicium is to be entered at said calling party's station;
if said personalized identification indicium is not entered by said calling party, determining by said service logic a default identification indicium based on querying a service profile associated with said calling party's station; and
transmitting said default identification indicium to said called party's station.

20. The method as set forth in claim 19, wherein said service profile is stored in a local database associated with a switching node serving said calling party.

21. The method as set forth in claim 19, wherein said service profile is integrated within a switching node serving said calling party.

22. The method as set forth in claim 19, wherein said service profile is stored in a remote database associated with a service control point disposed in said telecommunications network.

23. The method as set forth in claim 13, further comprising the step of providing one of a recall dial tone and an announcement to said calling party by said telecommunications network after entering said personalized identification indicium.
